# EUROPEAN PATENT SPECIFICATION

(11) **EP 4 475 303 B1**
(45) Date of publication and mention of the grant of the patent: **29.04.2026**
(21) Application number: 23907293.7
(22) Date of filing: 11.09.2023
(51) Int. Cl.: H01M 50/24, H01M 50/264, H01M 50/691, H01M 50/249

(54) **BATTERY PACK**
BATTERIEPACK
BLOC-BATTERIE

(30) Priority: 23.12.2022 KR 20220183754; 11.08.2023 KR 20230105865
(43) Date of publication of application: 11.12.2024
(73) Proprietor: LG Energy Solution, Ltd., Seoul 07335 (KR)
(72) Inventor: SEOL, Jae-Jung, Daejeon 34122 (KR)
(74) Representative: Plasseraud IP
(86) International application number: PCT/KR2023/013602
(87) International publication number: WO 2024/136006

(56) References cited:
- CN-A- 113 745 739
- CN-U- 216 698 569
- CN-U- 216 698 569
- JP-B2- 6 713 055
- KR-A- 20070 110 567
- KR-A- 20140 123 757
- KR-B1- 102 065 096

## Description

### TECHNICAL FIELD

The present disclosure relates to a battery pack.

The present application claims priority to Korean Patent Application No. 10-2022-0183754 filed on December 23, 2022 in the Republic of Korea and Korean Patent Application No. 10-2023-0105865 filed on August 11, 2023 in the Republic of Korea.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

The battery pack may be exposed to an external environment depending on the environment in which it is installed. The battery pack exposed to the outside may be damaged by various foreign substances or moisture. For example, the fastening member that forms the exterior of the battery pack may oxidize or corrode due to moisture, so the fastening force may be weakened. Therefore, a structure is needed to prevent the fastening member from being damaged even when it is exposed to moisture.

CN 216 698 569 describes a battery pack with fastening members but lacks mentioning a drainage hole. CN 113 745 739 describes a power supply system and a new energy automobile, which comprise a box body, and relates to sealing issue.

### DISCLOSURE

### Technical Problem

The present disclosure is designed to solve these and other problems.

The present disclosure is directed to providing a battery pack that includes a structure that may easily discharge or evaporate moisture even when it is exposed to moisture.

The present disclosure is further directed to providing a battery pack with improved sealing performance.

### Technical Solution

The invention is defined in the set of claims.

According to claim 1, there is provided a battery pack, comprising: a case configured to form an inner space and having a top plate and a side plate; a plurality of battery cells located inside the case; and a fastening member configured to penetrate the top plate and be inserted into the side plate, wherein the side plate has a drain hole that exposes the fastening member to the outside.

In addition, the drain hole may be formed in an outer surface of the side plate.

In addition, the drain hole may be formed to be slanted downward.

In addition, the battery pack may further comprise a gasket fixed between the top plate and the side plate.

In addition, the fastening member may be located outer than the gasket.

In addition, the side plate may include a vertical portion having a fastening hole into which the fastening member is inserted; and a horizontal portion configured to extend inward from the vertical portion, wherein the gasket may be located between the horizontal portion and the top plate.

In addition, the drain hole exposes a lower surface of the fastening member.

In addition, the drain hole exposes a side surface of the fastening member.

In addition, the battery pack may further comprise a filter configured to cover the drain hole and having air permeability.

In another aspect of the present disclosure, there is also provided a vehicle, comprising the battery pack according to the present disclosure.

### Advantageous Effects

According to at least one of the embodiments of the present disclosure, it is possible to provide a battery pack that includes a structure that may easily discharge or evaporate moisture even when it is exposed to moisture.

According to at least one of the embodiments of the present disclosure, it is possible to provide a battery pack with improved sealing performance.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack according to an embodiment of the present disclosure.
FIG. 3 is an exploded view showing a top plate and a gasket according to an embodiment of the present disclosure.
FIG. 4 is an enlarged view showing a portion A of FIG. 1.
FIG. 5 is a side view showing the portion A of FIG. 1.
FIG. 6 is an exploded view showing a part of a partial cross-sectional configuration of the portion A of FIG. 1.
FIG. 7 is a diagram showing a part of the partial cross-sectional configuration of the portion A of FIG. 1.
FIG. 8 is a diagram showing a modified example of the partial cross-sectional configuration of the portion A of FIG. 1.
FIG. 9 is a diagram showing a modified example of the portion A of FIG. 1.
FIG. 10 is a diagram showing a part of the partial cross-sectional configuration of the modified example of the portion A of FIG. 9.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

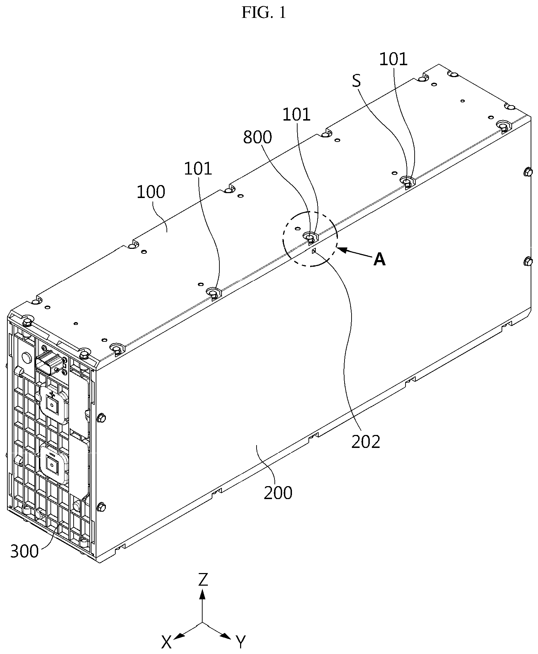

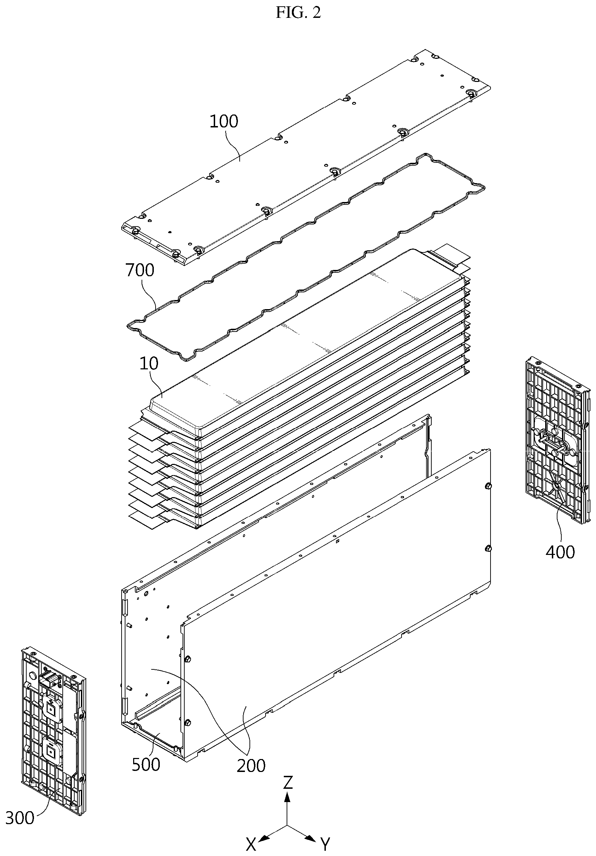

FIG. 1 is a diagram showing a battery pack according to an embodiment of the present disclosure. FIG. 2 is an exploded view showing some components of the battery pack according to an embodiment of the present disclosure. Referring to FIGS. 1 and 2, the battery pack according to an embodiment of the present disclosure may include a case 20, a plurality of battery cells 10, and a fastening member 800.

The case 20 may have a rectangular parallelepiped shape. The case 20 may form the appearance of the battery pack. The case 20 may be configured with a plurality of parts. The case 20 includes a top plate 100, a pair of side plates 200, a base plate, a front plate 300, and a rear plate 400. The case 20 may be formed by fastening, coupling, or fixing a plurality of plates. The case 20 may have a space formed therein.

The top plate 100 may have a rectangular plate shape. The side plate 200 may have a rectangular plate shape. The side plate 200 may be configured as a pair. Each side plate 200 may extend from the top plate 100 in a lower direction or in the -Z-axis direction. The pair of side plates 200 may be arranged along the left and right direction or the Y-axis direction.

The plurality of battery cells 10 are located inside the case 20. The battery cell 10 may refer to a secondary battery. At this time, the battery cell 10 may have a rectangular pouch shape. The plurality of battery cells 10 may be arranged or stacked along the upper and lower direction or the Z-axis direction.

The fastening member 800 is configured to penetrate the top plate 100 and be inserted into the side plate 200. For example, the fastening member 800 may be a bolt and may be coupled to a thread formed in the side plate 200. The fastening member 800 may be provided in plurality. The plurality of fastening members 800 may fasten, couple, or fix the top plate 100 and the side plate 200. The fastening member 800 may be made of a metal material.

The side plate 200 has a drain hole 202. The drain hole 202 exposes at least a part of the fastening member 800 to the outside. The drain hole 202 may be provided in plurality.

When the battery pack is exposed to outdoor or external environments, the fastening member 800 may be exposed to moisture. At this time, if moisture is not properly discharged or dried, the fastening member 800 may oxidize or corrode. The corroded fastening member 800 may weaken the fastening force. Because of this, the coupling between the top plate 100 and the side plate 200 may be loosened. Therefore, the internal components of the battery pack may be exposed to foreign substances or moisture, and the safety of the battery pack may deteriorate.

According to this configuration of the present disclosure, at least a part of the fastening member 800, which forms the case 20 of the battery pack, is exposed to the outside. Because of this, even if moisture accumulates in the fastening member 800, the moisture may be easily discharged to the outside or evaporated. Accordingly, the fastening member 800 may be prevented from being oxidized or corroded, and the coupling force of the fastening member 800 may be maintained.

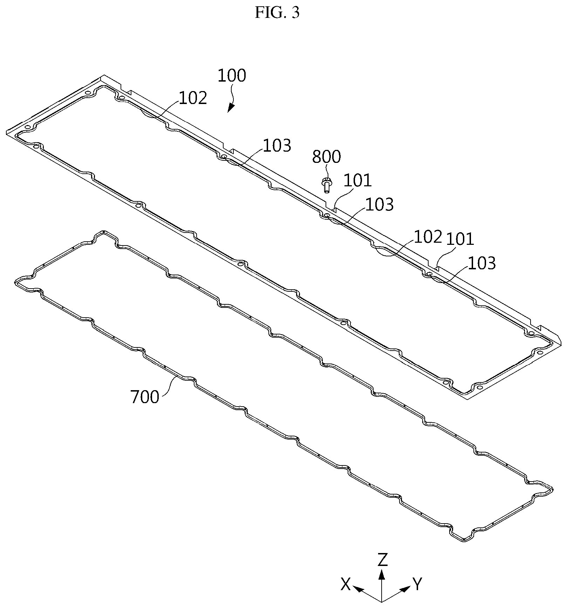

FIG. 3 is an exploded view showing a top plate 100 and a gasket 700 according to an embodiment of the present disclosure. Referring to FIG. 3, the battery pack according to an embodiment of the present disclosure may further include a gasket 700. The gasket 700 may extend along the periphery of the top plate 100. The gasket 700 may have a rectangular ring shape. A sealing groove 102 may be formed on the inner surface of the top plate 100, and the gasket 700 may be inserted or accommodated in the sealing groove 102. The gasket 700 may be made of a highly ductile metal material. The gasket 700 may be positioned or fixed between the top plate 100 and the side plate 200. The gasket 700 may be compressed and deformed between the top plate 100 and the side plate 200.

According to this configuration in the present disclosure, the gasket 700 may seal the top plate 100 and the side plate 200 from each other. Because of this, the battery pack may be waterproof and dustproof.

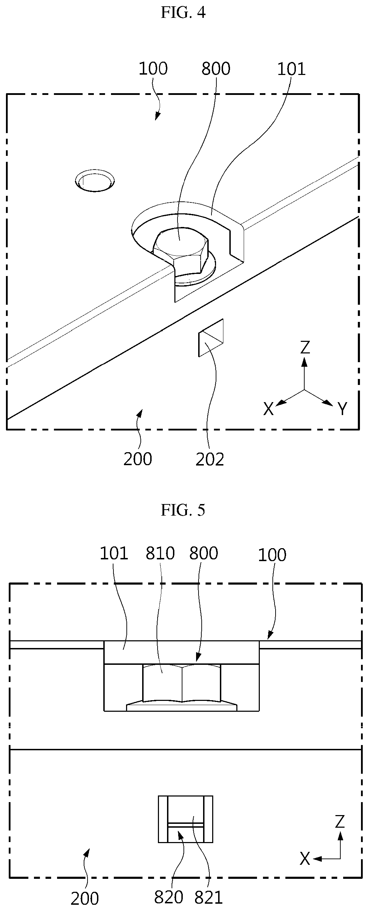

FIG. 4 is an enlarged view showing a portion A of FIG. 1. FIG. 5 is a side view showing the portion A of FIG. 1. Referring to FIGS. 4 and 5, the drain hole 202 of the battery pack according to an embodiment of the present disclosure may be formed in an outer surface of the side plate 200. The drain hole 202 may communicate with the fastening holes 103, 201 into which the fastening member 800 is inserted.

According to this configuration of the present disclosure, moisture accumulated in the fastening member 800 may be discharged to the outside or evaporated through the drain hole 202.

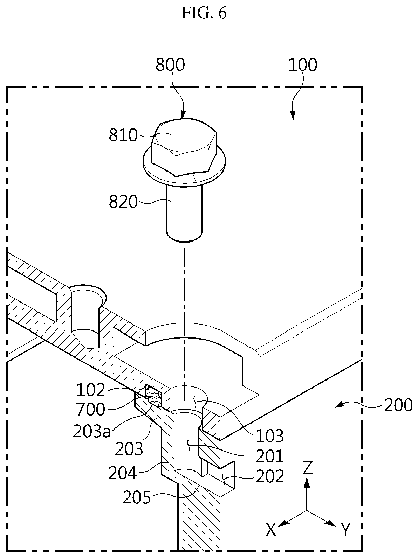

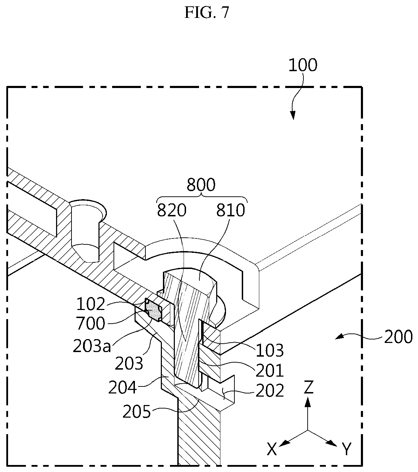

FIG. 6 is an exploded view showing a part of a partial cross-sectional configuration of the portion A of FIG. 1. FIG. 7 is a diagram showing a part of the partial cross-sectional configuration of the portion A of FIG. 1. Referring to FIGS. 6 and 7, the fastening member 800 of the battery pack according to an embodiment of the present disclosure may include a head 810 and a body 820. The head 810 may be located in a groove 101. The body 820 may extend from the head 810 in a lower direction or in the -Z-axis direction. The body 820 may have a thread formed along the longitudinal direction.

Referring to FIGS. 6 and 7, the drain hole 202 of the battery pack according to the present disclosure exposes a lower side surface 822 of the fastening member 800. A gap or space may be formed between the lower surface 822 of the fastening member 800 and the side plate 200.

According to this configuration in the present disclosure, moisture accumulated on the lower surface 822 of the fastening member 800 may be discharged to the outside or evaporated through the drain hole 202.

Referring to FIGS. 6 and 7, the drain hole 202 of the battery pack according to the present disclosure exposes at least a part of the side surface 821 of the fastening member 800.

According to this configuration in the present disclosure, moisture accumulated on the side surface 821 of the fastening member 800 may be discharged to the outside or evaporated through the drain hole 202.

Referring to FIGS. 6 and 7, the fastening member 800 of the battery pack according to an embodiment of the present disclosure may be located outer than the gasket 700. The gasket 700 may be compressed and deformed by the coupling force of the fastening member 800. The fastening member 800 may provide a coupling force so that the top plate 100 and the side plate 200 are coupled, but it may be difficult to block moisture or foreign substances from penetrating.

According to this configuration in the present disclosure, since the gasket 700 is located inner than the fastening member 800, it is possible to prevent or block moisture or foreign substances from penetrating into the inside of the battery pack.

Referring to FIGS. 6 and 7, the side plate 200 of the battery pack according to an embodiment of the present disclosure may include a vertical portion 204 having a fastening hole 201 into which the fastening member 800 is inserted, and a first horizontal portion 203 extending inward from the vertical portion 204. Also, the gasket 700 may be located between the horizontal portion and the top plate 100.

The fastening hole 201 may be formed in the upper and lower direction or the Z-axis direction. Also, the vertical portion 204 may have a thread formed along the periphery of the fastening hole 201. The fastening member 800 may be fastened to the thread of the vertical portion 204. The drain hole 202 may communicate with the fastening hole 201. The drain hole 202 may extend horizontally from the fastening hole 201.

The first horizontal portion 203 may extend from the top or the upper side of the vertical portion 204 in an inward direction or the -Y-axis direction. The first horizontal portion 203 may support the lower surface or the inner surface of the top plate 100. The first horizontal portion 203 may include a sealing groove 102. The sealing groove 102 may be formed on the inner surface of the top plate 100, and the gasket 700 may be inserted or accommodated in the sealing groove 102. The gasket 700 may be made of a highly ductile metal material. The gasket 700 may be positioned or fixed between the top plate 100 and the first horizontal portion 203 of the side plate 200. The gasket 700 may be compressed and deformed between the top plate 100 and the first horizontal portion 203 of the side plate 200.

The first horizontal portion 205 may form a drain hole 202. The first horizontal portion 205 may extend in the horizontal direction from the lower end of the vertical portion 204 or the lower end of the fastening hole 201.

According to this configuration in the present disclosure, since the side plate 200 includes the first horizontal portion 203, it is possible to improve coupling with the top plate 100 and improve the waterproof and dustproof performance of the battery pack.

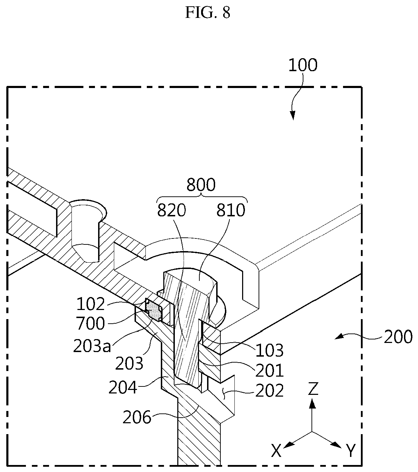

FIG. 8 is a diagram showing a modified example of the partial cross-sectional configuration of the portion A of FIG. 1. Referring to FIG. 8, the drain hole 202 of the battery pack according to an embodiment of the present disclosure may be formed to be slanted downward.

The inclined portion 206 may form a drain hole 202. The inclined portion 206 may extend in an oblique direction downward from the lower end of the vertical portion 204 or the lower end of the fastening hole 201.

According to this configuration of the present disclosure, moisture or foreign substances accumulated on the drain hole 202 may be easily discharged to the outside of the battery pack along the inclined portion 206.

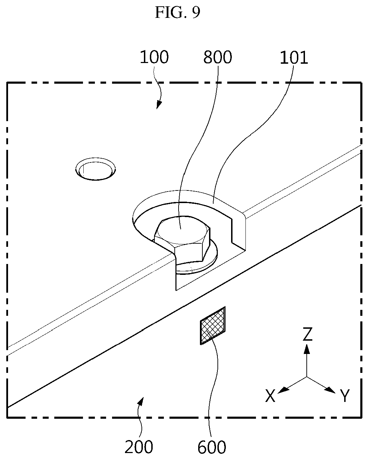

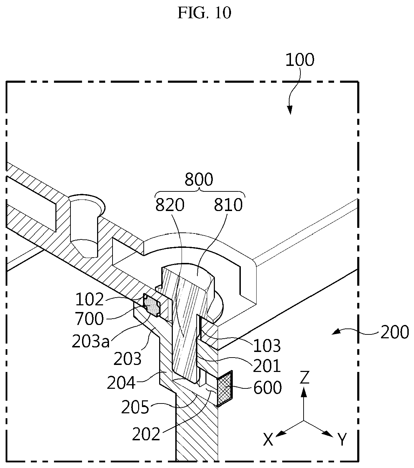

FIG. 9 is a diagram showing a modified example of the portion A of FIG. 1. FIG. 10 is a diagram showing a part of the partial cross-sectional configuration of the modified example of the portion A of FIG. 9. Referring to FIGS. 9 and 10, the battery pack according to an embodiment of the present disclosure may further include a filter 600 that covers the drain hole 202 and has air permeability.

The filter 600 may be attached or fastened to the side plate 200 to cover the drain hole 202. The filter 600 may allow moisture accumulated in drain hole 202 to pass. Meanwhile, the filter 600 may prevent external foreign substances from penetrating into the drain hole 202.

According to this configuration of the present disclosure, it is possible to prevent or block foreign substances from penetrating into the drain hole 202 while easily discharging moisture accumulated in the drain hole 202.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle in addition to the battery pack. For example, the vehicle according to the present disclosure may further include a body, a motor, and control devices such as an ECU (electronic control unit) in addition to the battery pack according to the present disclosure.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only.

## Claims

1. A battery pack, comprising:
a case (20) configured to form an inner space and having a top plate (100) and a side plate (200);
a plurality of battery cells (10) located inside the case (20); and
a fastening member (800) configured to penetrate the top plate (100) and be inserted into the side plate (200), **characterized in that**
the side plate (200) has a drain hole (202) that exposes a lower side surface of the fastening member (800) to the outside.

2. The battery pack according to claim 1,
wherein the drain hole (202) is formed in an outer surface of the side plate (200).

3. The battery pack according to claim 2,
wherein the drain hole (202) is formed to be slanted downward.

4. The battery pack according to claim 1, further comprising:
a gasket (700) fixed between the top plate (100) and the side plate (200).

5. The battery pack according to claim 4,
wherein the fastening member (800) is located outer than the gasket (700).

6. The battery pack according to claim 4,
wherein the side plate (200) includes:
a vertical portion (204) having a fastening hole (201) into which the fastening member (800) is inserted; and
a horizontal portion (203) configured to extend inward from the vertical portion (204),
wherein the gasket (700) is located between the horizontal portion (203) and the top plate (100).

7. The battery pack according to claim 1, further comprising:
a filter (600) configured to cover the drain hole (202) and having air permeability.

8. A vehicle, comprising the battery pack according to any one of claims 1 to 7.

## Patentansprüche

1. Batteriepack, umfassend:
ein Gehäuse (20), welches dazu eingerichtet ist, einen Innenraum zu bilden, und eine obere Platte (100) und eine Seitenplatte (200) aufweist;
eine Mehrzahl von Batteriezellen (10), welche innerhalb des Gehäuses (20) angeordnet sind; und
ein Befestigungselement (800), welches dazu eingerichtet ist, die obere Platte (100) zu durchdringen und in die Seitenplatte (200) eingesetzt zu sein, **dadurch gekennzeichnet, dass**
die Seitenplatte (200) ein Ablaufloch (202) aufweist, welches eine untere Seitenfläche des Befestigungselements (800) zu der Außenseite freilegt.

2. Batteriepack nach Anspruch 1,
wobei das Ablaufloch (202) in einer äußeren Fläche der Seitenplatte (200) gebildet ist.

3. Batteriepack nach Anspruch 2,
wobei das Ablaufloch (202) dazu gebildet ist, nach unten abgeschrägt zu sein.

4. Batteriepack nach Anspruch 1, ferner umfassend:
eine Dichtung (700), welche zwischen der oberen Platte (100) und der Seitenplatte (200) fixiert ist.

5. Batteriepack nach Anspruch 4,
wobei das Befestigungselement (800) außerhalb der Dichtung (700) angeordnet ist.

6. Batteriepack nach Anspruch 4,
wobei die Seitenplatte (200) umfasst:
einen vertikalen Abschnitt (204), welcher ein Befestigungsloch (201) aufweist, in welchen das Befestigungselement (800) eingesetzt ist; und
einen horizontalen Abschnitt (203), welcher dazu eingerichtet ist, sich nach innen von dem vertikalen Abschnitt (204) zu erstrecken,
wobei die Dichtung (700) zwischen dem horizontalen Abschnitt (203) und der oberen Platte (100) angeordnet ist.

7. Batteriepack nach Anspruch 1, ferner umfassend:
einen Filter (600), welcher dazu eingerichtet ist, das Ablaufloch (202) zu bedecken, und Luftdurchlässigkeit aufweist.

8. Fahrzeug, umfassend den Batteriepack nach einem der Ansprüche 1 bis 7.

## Revendications

1. Bloc-batterie, comprenant :
un boîtier (20) configuré pour former un espace interne et ayant une plaque supérieure (100) et une plaque latérale (200) ;
une pluralité d'éléments de batterie (10) situés à l'intérieur du boîtier (20) ; et
un organe de fixation (800) configuré pour pénétrer la plaque supérieure (100) et être inséré dans la plaque latérale (200), **caractérisé en ce que**
la plaque latérale (200) possède un trou de vidange (202) qui expose une surface côté inférieur de l'organe de fixation (800) à l'extérieur.

2. Bloc-batterie selon la revendication 1,
dans lequel le trou de vidange (202) est formé dans une surface externe de la plaque latérale (200).

3. Bloc-batterie selon la revendication 2,
dans lequel le trou de vidange (202) est formé pour être incliné vers le bas.

4. Bloc-batterie selon la revendication 1, comprenant en outre :
un joint d'étanchéité (700) fixé entre la plaque supérieure (100) et la plaque latérale (200).

5. Bloc-batterie selon la revendication 4,
dans lequel l'organe de fixation (800) est situé plus à l'extérieur que le joint d'étanchéité (700).

6. Bloc-batterie selon la revendication 4,
dans lequel la plaque latérale (200) comporte :
une portion verticale (204) ayant un trou de fixation (201) dans lequel l'organe de fixation (800) est inséré ; et
une portion horizontale (203) configurée pour s'étendre vers l'intérieur à partir de la portion verticale (204),
dans lequel le joint d'étanchéité (700) est situé entre la portion horizontale (203) et la plaque supérieure (100).

7. Bloc-batterie selon la revendication 1, comprenant en outre :
un filtre (600) configuré pour recouvrir le trou de vidange (202) et ayant une perméabilité à l'air.

8. Véhicule, comprenant le bloc-batterie selon l'une quelconque des revendications 1 à 7.
